# EUROPEAN PATENT APPLICATION

(11) **EP 4 459 467 A1**
(43) Date of publication of application: **06.11.2024**
(21) Application number: 23867201.8
(22) Date of filing: 22.08.2023
(51) Int. Cl.: G06F 9/54

(54) **INFORMATION SHARING METHOD AND APPARATUS, DEVICE, STORAGE MEDIUM AND PROGRAM PRODUCT**

(30) Priority: 20.09.2022 CN 202211141603
(71) Applicant: Tencent Technology (Shenzhen) Company Limited, Shenzhen, Guangdong 518057 (CN)
(72) Inventor: XIAO, Chengliu, Shenzhen, Guangdong 518057 (CN); LIN, Bukai, Shenzhen, Guangdong 518057 (CN)
(74) Representative: EP&C
(86) International application number: PCT/CN2023/114253
(87) International publication number: WO 2024/060908

(57) **Abstract**

Embodiments of the present disclosure disclose a method, an apparatus, a device, a storage medium, and a program product for information sharing. The method includes: displaying a first application interface including a shared object selection control and a shared information selection control (301); determining at least one type of target information for sharing from at least two types of candidate information of the first terminal in response to a selection operation on the shared information selection control (302); displaying a list of objects to be shared in response to a selection operation on the shared object selection control (303); selecting a first shared object in the list of objects to be shared (304); transmitting a sharing link to a second terminal (305); receiving the sharing link (401); displaying a second application interface in response to a trigger operation on the sharing link (402); and displaying the target information in the second application interface (403).

## Description

### RELATED APPLICATION

The present disclosure claims priority to Chinese Patent Application No. 202211141603.4, filed with the China National Intellectual Property Administration on September 20, 2022 and entitled "METHOD, APPARATUS, DEVICE, STORAGE MEDIUM, AND PROGRAM PRODUCT FOR INFORMATION SHARING".

### FIELD OF THE TECHNOLOGY

The present disclosure relates to the technical field of interface interactions, and in particular, to a method, an apparatus, a device, a storage medium, and a program product for information sharing.

### BACKGROUND OF THE DISCLOSURE

With the continuous development of mobile terminal technologies, mobile terminals have been widely used in scenarios such as child/elderly monitoring and safe traveling.

In the related art, the scenarios such as child/elderly monitoring and safe traveling may be achieved through location information of mobile terminals such as wearable devices (for example, smartwatches) worn by monitored individuals. For example, a wearable device may report itinerary related information to a cloud server, and the cloud server transmits the itinerary related information to a terminal bound to the wearable device.

However, in the foregoing solution, the terminal needs to be bound in advance, and the information transmitted is relatively single, resulting in a low efficiency of information sharing.

### SUMMARY

Embodiments of the present disclosure provide a method, an apparatus, a device, a storage medium, and a program product for information sharing. The technical solutions are as follows:

According to an aspect, an embodiment of the present disclosure provides a method for information sharing, executable by a first terminal and a second terminal, and the method including:
displaying, by the first terminal, a first application interface, the first application interface including a shared object selection control and a shared information selection control;
selecting, by the first terminal, at least one type of candidate information as at least one type of target information for sharing from at least two types of candidate information of the first terminal in response to receipt of a selection operation on the shared information selection control;
receiving, by the first terminal, a selection operation on the shared object selection control and displaying a list of objects to be shared;
selecting, by the first terminal, a first shared object from the list of objects to be shared;
transmitting, by the first terminal, a sharing link to the second terminal corresponding to the first shared object;
receiving, by the second terminal, the sharing link transmitted by the first terminal;
displaying, by the second terminal, a second application interface in response to receipt of a trigger operation on the sharing link; and displaying the at least one type of target information from the first terminal on the second application interface.

According to an aspect, an embodiment of the present disclosure provides a method for information sharing, executable by a first terminal, and the method including:
displaying a first application interface, the first application interface including a shared object selection control and a shared information selection control;
selecting at least one type of candidate information as at least one type of target information for sharing from at least two types of candidate information of the first terminal in response to receipt of a selection operation on the shared information selection control;
receiving a selection operation on the shared object selection control and displaying a list of objects to be shared;
selecting a first shared object from the list of objects to be shared;
transmitting a sharing link to the second terminal corresponding to the first shared object, where the sharing link is used by the second terminal to obtain and display the at least one type of target information from the first terminal.

According to an aspect, an embodiment of the present disclosure further provides a method for information sharing, executable by a second terminal, and the method including:
receiving a sharing link transmitted by a first terminal;
displaying a second application interface in response to receipt of a trigger operation on the sharing link; and
displaying at least one type of target information from the first terminal on the second application interface, where the at least one type of target information is at least one type candidate information selected from at least two types of candidate information of the first terminal by means of a shared information selection control in a first application interface displayed by the first terminal.

In another aspect, an embodiment of the present disclosure provides an apparatus for information sharing, the apparatus including:
an interface display module, configured to display a first application interface, the first application interface including a shared object selection control and a shared information selection control;
an information selection module, configured to select at least one type of candidate information as at least one type of target information for sharing from at least two types of candidate information of a first terminal in response to receipt of a selection operation on the shared information selection control;
a list display module, configured to display a list of objects to be shared in response to receipt of a selection operation on the shared object selection control;
an object selection module, configured to select a first shared object from the list of objects to be shared; and
a link transmitting module, configured to transmit a sharing link to the second terminal corresponding to the first shared object, where the sharing link is used by the second terminal to obtain and display the at least one type of target information from the first terminal.

In another aspect, an embodiment of the present disclosure provides an apparatus for information sharing, the apparatus including:
a link receiving module, configured to receive a sharing link transmitted by a first terminal;
an interface display module, configured to display a second application interface in response to receipt of a trigger operation on the sharing link; and
an information display module, configured to display at least one type of target information from the first terminal on the second application interface, where the at least one type of target information is at least one type of candidate information selected from at least two types of candidate information of the first terminal by means of a shared information selection control in a first application interface displayed by the first terminal.

According to an aspect, an embodiment of the present disclosure provides a computer device, including a processor and a memory, the computer device including at least one computer instruction, and the at least one computer instruction being loadable and executable by the processor to implement the method for information sharing as described in the above aspects.

According to another aspect, an embodiment of the present disclosure provides a computer-readable storage medium, storing at least one computer instruction, and the at least one computer instruction being loadable and executable by a processor to implement the method for information sharing as described in the above aspects.

In another aspect, provided is a computer program product or a computer program, the computer program product or the computer program including a computer instruction, and the computer instruction being stored in a computer-readable storage medium. A processor of the computer device reads the computer instruction from the computer-readable storage medium, and the processor executes the computer instruction, to cause the computer device to implement the method for information sharing provided in various optional implementations as described in the above aspects.

In all embodiments of the present disclosure, the first terminal displays the first application interface including the shared object selection control and the shared information selection control. Upon receipt of the selection operation on the shared object selection control, the first terminal shares the at least one type of target information selected from the at least two types of candidate information of the first terminal by means of the shared information selection control to the second terminal corresponding to the first shared object selected from the list of objects to be shared through the sharing link, so that personalized selection of a shared object and shared content is implemented and the efficiency of information sharing is expanded.

### BRIEF DESCRIPTION OF THE DRAWINGS

FIG. 1 is a schematic diagram of an implementation environment according to an exemplary embodiment of the present disclosure.
FIG. 2 is a flowchart of a method for information sharing according to an exemplary embodiment of the present disclosure.
FIG. 3 is a flowchart of a method for information sharing according to an exemplary embodiment of the present disclosure.
FIG. 4 is a flowchart of a method for information sharing according to an exemplary embodiment of the present disclosure.
FIG. 5 is a block diagram for a system for information sharing according to an exemplary embodiment of the present disclosure.
FIG. 6 is a flowchart of a method for information sharing according to an exemplary embodiment of the present disclosure.
FIG. 7 is a schematic diagram of a process for transmitting a first reminder message involved in the embodiment of FIG. 6.
FIG. 8 is a schematic diagram of a process for transmitting a private link involved in the embodiment of FIG. 6.
FIG. 9 is an overall framework diagram of itinerary information sharing according to an exemplary embodiment of the present disclosure.
FIG. 10 is a framework diagram of an itinerary information sharing side according to an exemplary embodiment of the present disclosure.
FIG. 11 and FIG. 12 are schematic interface diagrams of an itinerary information sharing side involved in an embodiment of the present disclosure.
FIG. 13 and FIG. 14 are schematic interface diagrams of a shared side involved in an embodiment of the present disclosure.
FIG. 15 is a block diagram of an apparatus for information sharing according to an exemplary embodiment of the present disclosure.
FIG. 16 is a block diagram of an apparatus for information sharing according to an exemplary embodiment of the present disclosure.
FIG. 17 is a structural block diagram of a computer device according to an exemplary embodiment of the present disclosure.

### DESCRIPTION OF EMBODIMENTS

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations consistent with the present disclosure. On the contrary, the implementations are merely examples of apparatuses and methods that are described in detail in the appended claims and that are consistent with some aspects of the present disclosure.

"Several" mentioned in the specification means one or more, and "plurality of" mentioned herein means two or more. "And/or" describes an association relationship for describing associated objects and represents that three relationships may exist. For example, A and/or B may represent the following three cases: Only A exists, both A and B exist, and only B exists. The character "/" in this specification generally indicates an "or" relationship between the associated objects.

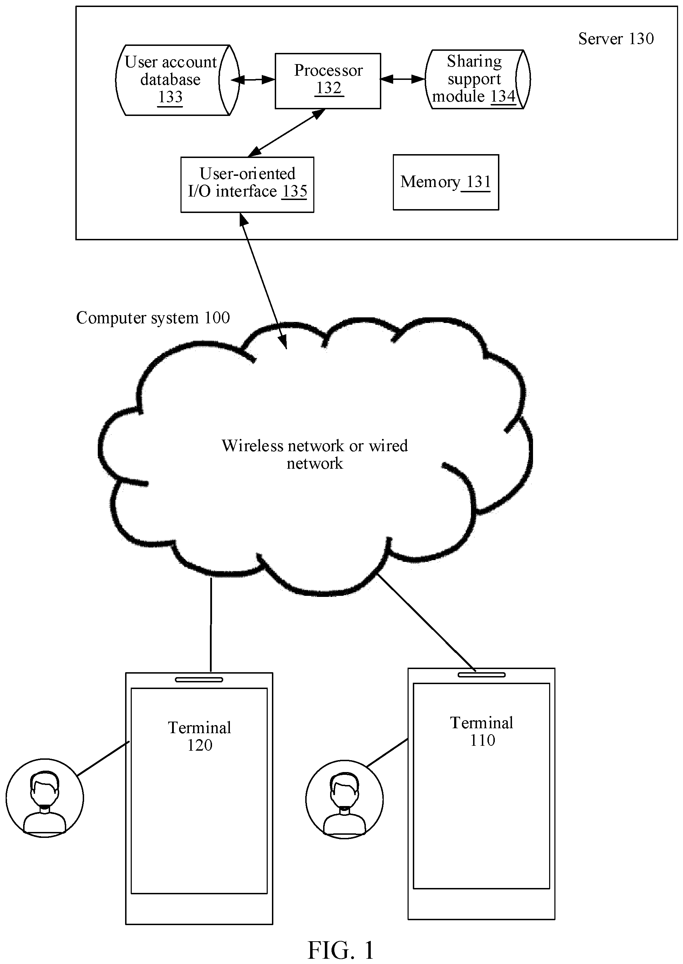

FIG. 1 is a schematic diagram of an implementation environment according to an exemplary embodiment of the present disclosure. The implementation environment may include: a terminal 110, a terminal 120, and a server 130.

The terminal 110 may be a terminal in which a first application is installed and runs. For example, the terminal 110 may be a personal computer (PC), a portable computer, a personal workstation, a smartphone, or a tablet.

Applications having an information sharing function and/or information receiving function are installed and run in the terminal 110 and the terminal 120.

In one embodiment, the first application in the terminal 110 has an information sharing function, and the second application in the terminal 120 has an information receiving function. The first application and the second application may be a same application or different applications.

The terminal 110 may share one or more types of information of the terminal 110 with the terminal 120 through a sharing link by using the first application. The terminal 120 receives the sharing link by using the second application, obtains the one or more types of information of the terminal 110, and displays the one or more types of information. Information to be shared in the terminal 110 and a shared object (that is, the terminal 120) may be selected by a user of the terminal 110.

An information sharing support service runs on the server 130, and the information sharing support service is used for providing back-end support for information sharing between the terminal 110 and the terminal 120.

In FIG. 1, only the terminal 110 and the terminal 120 are shown, but in different embodiments, more terminals may access the server 130, so that information sharing and reception between three or more terminals is implemented. For example, the terminal 110 may share information with at least two terminals.

The terminal 110 and the terminal 120 are connected to the server 130 by using a wireless network or a wired network.

The server 130 may be at least one of: one server, a server cluster formed by multiple servers, a cloud computing center, or a virtualized center.

In one exemplary example, the server 130 includes a memory 131, a processor 132, a user account database 133, a sharing support module 134, and a user-oriented input/output interface (I/O interface) 135. The processor 132 is configured to load an instruction stored in the server 130 and process data from the user account database 133 and the sharing support module 134. The user account database 133 is configured to store data of user accounts, such as avatars of user accounts, nicknames of the user accounts, grades of the user accounts, and location of the user accounts, used by the terminal 110, the terminal 120, and other terminals. The sharing support module 134 is configured to provide a back-end service for information sharing. The user-oriented I/O interface 135 is configured to establish communication with the terminal 110 and/or the terminal 120 by using a wireless network or a wired network to implement data exchange.

Information (including, but not limited to, user account information, user personal information, etc.), data (including, but not limited to, data for analysis, stored data, displayed data, etc.), and signals involved in the present disclosure are all authorized by the users or fully authorized by all parties, and the collection, use, and processing of relevant data need to comply with relevant laws, regulations, and standards of relevant countries and regions. For example, information such as user accounts, itinerary related information (for example, location, battery level, and communication information), device status, and other information involved in the present disclosure are obtained with full authorization.

In one implementation solution, itinerary related information is obtained by using wearable devices such as smartwatches or wristbands. For example, after the elderly wear these physical devices and binding relationships are established with related applications in mobile phones of their children or guardians, their children or guardians can view information such as locations of the elderly in real time in the related applications in the mobile phones.

However, the foregoing solution has problems mainly in three aspects.

First, the elderly need to carry additional devices before traveling, and the elderly may probably forget to carry the devices or find it inconvenient to carry the devices.

Second, after the devices are bound to the applications in the mobile phones of the children or guardians, it is difficult to unbind, and the elderly find it difficult to complete the operation independently; and therefore the assistance by the children or guardians for unbinding is needed.

Third, the traveling information of the elderly can be viewed only by the ones to which the wearable devices are bound, and the elderly cannot freely share the information with others in real time.

The above three problems result in a low efficiency in sharing of itinerary related information.

A subsequent embodiment of the present disclosure provides a method for information sharing, which can implement free selection of a shared object and shared information through a simple interface interaction, thereby improving the efficiency of information sharing.

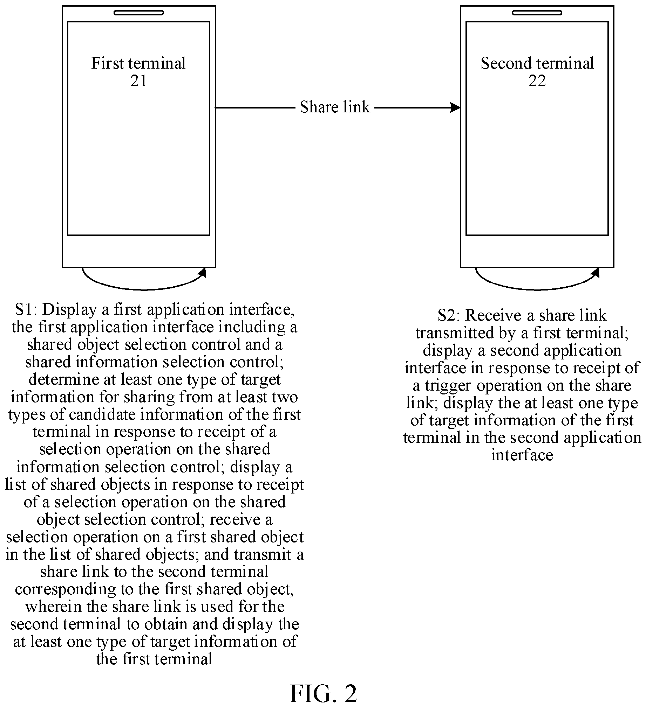

FIG. 2 is a flowchart of a method for information sharing according to an exemplary embodiment of the present disclosure. The method for information sharing may be executable by a first terminal 21 and a second terminal 22. The first terminal 21 and a second terminal 22 may be the terminal 110 and the terminal 120 in the system shown in FIG. 1 above. The method includes the following operations.

S1: The first terminal 21 displays a first application interface, the first application interface including a shared object selection control and a shared information selection control; determines at least one type of target information for sharing from at least two types of candidate information of the first terminal in response to receipt of a selection operation on the shared information selection control, i.e. selecting at least one type of candidate information from at least two types of candidate information of the first terminal as the at least one type of target information; displays a list of objects to be shared in response to receipt of a selection operation on the shared object selection control; receives a selection operation on a first shared object in the list of objects to be shared; and transmits a sharing link to the second terminal corresponding to the first shared object, where the sharing link is used by the second terminal to obtain and display the at least one type of target information from the first terminal.

In one possible implementation, the first application interface is an interface in the first application.

The at least two types of candidate information may include at least two of information among device status information, location information, communication information, and status information corresponding to a user of the first terminal, .etc. A specific type of the candidate information is not limited in this embodiment of the present disclosure.

The user of the first terminal may select at least one type of target information from the at least two types of candidate information by using the shared information selection control to share the at least one type of target information with another shared object.

In one possible implementation, in response to a selection operation on the shared information selection control, the first terminal displays a list of shared information, and the list of shared information includes at least two types of candidate information available for sharing. In response to receipt of a selection operation on candidate information in the list of shared information, the first terminal determines the selected candidate information as the target information.

Certainly, in other possible implementations, when no selection operations on the shared information selection control are received, and a selection operation on the shared object selection control is received, the first terminal determines the candidate information selected in previous sharing as the target information.

In one possible implementation, the list of objects to be shared may include options of one or more shared objects. The shared object may be a contact object in the first application, or the shared object may be a contact object in the second application other than the first application.

In one possible implementation, the first terminal may transmit a sharing link to the second terminal through the first application; or, the first terminal may transmit a sharing link to the second terminal through a second application other than the first application.

In one possible implementation, when the user of the first terminal simultaneously or sequentially selects a plurality of shared objects, sharing links transmitted by the first terminal to second terminals respectively corresponding to the different shared objects may be different; or, the first terminal may transmit a same sharing link to second terminals respectively corresponding to different shared objects.

S2: The second terminal 22 receives the sharing link transmitted by the first terminal; displays a second application interface in response to receipt of a trigger operation on the sharing link; and displays the at least one type of target information from the first terminal on the second application interface.

In this embodiment of the present disclosure, the second terminal may display the sharing link after receiving the sharing link. For example, the second terminal displays the sharing link in form of a card message. A display method of the sharing link is not limited in this embodiment of the present disclosure.

In this embodiment of the present disclosure, after a user of the second terminal triggers the sharing link, the second terminal may transition from an interface displaying the sharing link to the second application interface.

The interface displaying the sharing link and the second application interface may be interfaces of different applications, or may be interfaces of a same application.

In this embodiment of the present disclosure, the first terminal may upload the at least one type of target information to a server, and the second terminal may obtain the at least one type of target information of the first terminal from the server.

In summary, by solutions illustrated in the embodiments of the present disclosure, the first terminal displays the first application interface including the shared object selection control and the shared information selection control and upon receipt of the selection operation on the shared object selection control, the first terminal shares the at least one type of target information selected from the at least two types of candidate information of the first terminal by means of the shared information selection control to the second terminal corresponding to the first shared object selected from the list of objects to be shared through the sharing link, so that personalized selection of a shared object and shared content is implemented and the efficiency of information sharing is expanded.

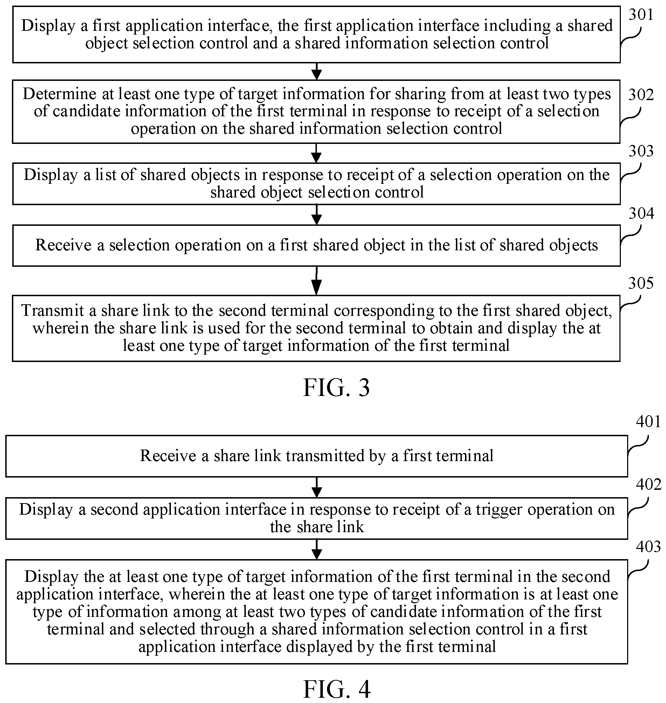

FIG. 3 is a flowchart of a method for information sharing according to an exemplary embodiment of the present disclosure. The method for information sharing may be executable by a first terminal. The first terminal may be the terminal 21 in FIG. 2 above. As shown in FIG. 3, the method for information sharing includes the following operations.

Operation 301: Display a first application interface, the first application interface including a shared object selection control and a shared information selection control.

Operation 302: Determine at least one type of target information for sharing from at least two types of candidate information of the first terminal in response to receipt of a selection operation on the shared information selection control.

Operation 303: Display a list of objects to be shared in response to receipt of a selection operation on the shared object selection control.

Operation 304: Receive a selection operation on a first shared object in the list of objects to be shared.

There is no strict chronological order between operation 302, operation 303, and operation 304, and in other words, selection of the shared object may be performed before selection of the shared information, or selection of the shared information may be performed before selection of the shared object.

Operation 305: Transmit a sharing link to a second terminal corresponding to the first shared object, where the sharing link is used by the second terminal to obtain and display the at least one type of target information from the first terminal.

FIG. 4 is a flowchart of a method for information sharing according to an exemplary embodiment of the present disclosure. The method for information sharing may be executable by a second terminal. The second terminal may be the terminal 22 in FIG. 2 above. As shown in FIG. 4, the method for information sharing includes the following operations.

Operation 401: Receive a sharing link transmitted by a first terminal.

Operation 402: Display a second application interface in response to receipt of a trigger operation on the sharing link.

Operation 403: Display the at least one type of target information from the first terminal on the second application interface, where the at least one type of target information is at least one type of candidate information selected from at least two types of candidate information of the first terminal through a shared information selection control in a first application interface displayed by the first terminal.

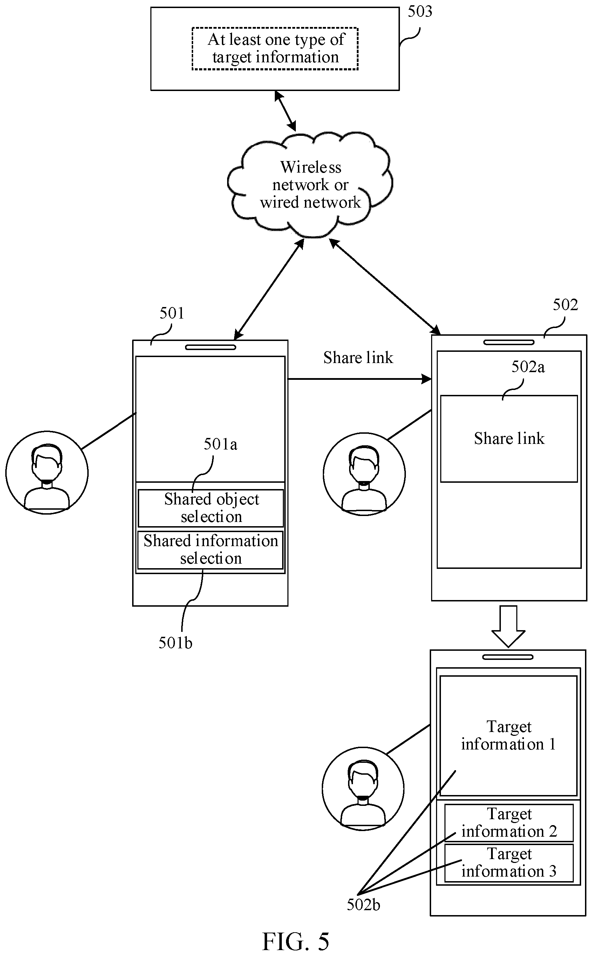

FIG. 5 is a block diagram for a system for information sharing according to an exemplary embodiment of the present disclosure. The system architecture includes a first terminal 501, a second terminal 502, and a server 503. A sharer user selects a first shared object by using a shared object selection control 501a in a first share interface displayed on the first terminal 501, and selects at least one type of target information by using a shared information selection control 501b in the first share interface. Then, the first terminal 501 uploads the at least one type of target information of the first terminal 501 to the server 503 for storage, and the first terminal 501 transmits a sharing link 502a (which may be directly transmitted or forwarded through a server) to the second terminal 502 corresponding to the first shared object. The second terminal 502 displays the sharing link 502a. After the user corresponding to the first shared object clicks on the sharing link 502a, the second terminal 502 displays the second application interface and obtains at least one type of target information 502b from the server 503, and displays at least one type of target information 502b on the second application interface.

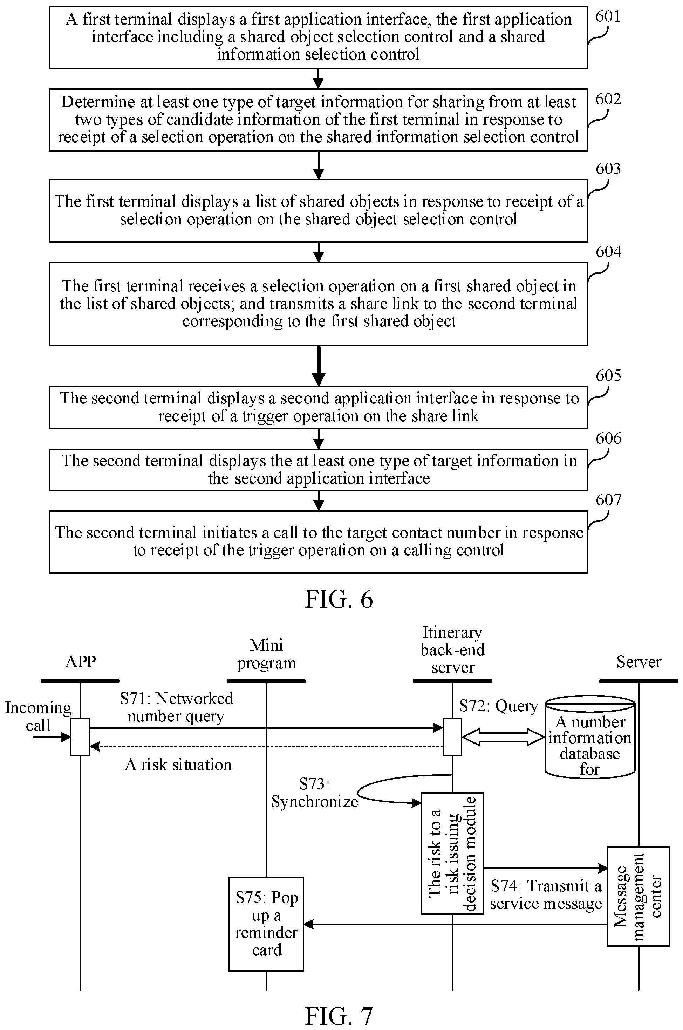

FIG. 6 is a flowchart of a method for information sharing according to an exemplary embodiment of the present disclosure. The method for information sharing may be executable by a first terminal and a second terminal. The first terminal and the second terminal may be the terminal 21 and the terminal 22 in FIG. 2 above. As shown in FIG. 6, the method for information sharing may include the following operations.

Operation 601: A first terminal displays a first application interface, the first application interface including a shared object selection control and a shared information selection control.

In the solution shown in this embodiment of the present disclosure, the at least two types of candidate information available for sharing include at least two types of the following information:
location information of the first terminal, where the location information is used for representing a location or place of the terminal, and for example, the location information may include geographic coordinates of the first terminal, a point of interest (PoI) where the first terminal is located, etc.;
device status information of the first terminal, where the device status information may include battery status information (for example, high battery level or low battery level) of the first terminal, sensor status information (for example, steady state, falling state, running state), etc.;
communication information of the first terminal, where the communication information of the first terminal may include a communication record, for example, a telephone communication record or a SMS communication record, of the first terminal;
and itinerary information of the first terminal, where the itinerary information of the first terminal may include a departure place, a destination place, a departure time, an arrival time, an itinerary route, etc. of an itinerary set in the first terminal.

Operation 602: Determine at least one type of target information for sharing from at least two types of candidate information of the first terminal in response to receipt of a selection operation on the shared information selection control. In particular, a target type of candidate information for sharing can be any of the mentioned types of candidate information.

In one embodiment, in an exemplary solution, the shared information selection control in the first application interface may include an on/off option of each type of candidate information, and when the on/off option of a particular type of candidate information is set to "on", the candidate information is selected as one type of the target information; and on the contrary, when the on/off option of the candidate information is set to "off", the candidate information is not selected as the target information. The on/off status of the respective types of candidate information may be changed by a user.

Alternatively, the shared information selection control may be implemented in other forms. An implementation form of the shared information selection control is not limited in this embodiment of the present disclosure. For example, the shared information selection control may be a button control. After a user clicks on the button control, the first terminal may display a list including options respectively corresponding to at least two types of candidate information. The user selects one or more types of target information by using the list, where a name of the selected target information may be displayed on the first application interface.

Operation 603: The first terminal displays a list of objects to be shared in response to receipt of a selection operation on the shared object selection control.

In this embodiment of the present disclosure, after the user of the first terminal clicks on the shared object selection control, the list of objects to be shared may be displayed. The list of objects to be shared may be a list of objects in an application corresponding to the first application interface, or may be a list of objects in another application (for example, an instant messaging application). The user may select, from the list of objects to be shared, an object to be shared, for example, selecting a plurality of shared objects at once by checking the shared objects.

Operation 604: The first terminal receives a selection operation on a first shared object in the list of objects to be shared; and transmits a sharing link to the second terminal corresponding to the first shared object.

The first shared object may refer to one shared object or a plurality of shared objects.

The sharing link is used by the second terminal to obtain and display the target information of the first terminal.

In some embodiments, the first application interface is an interface in a first application; and the first shared object is a contact object in a second application.

In this embodiment of the present disclosure, after the user selects at least one first shared object by using the list of objects to be shared, a sharing link may be generated and transmitted to the second terminal corresponding to the first shared object.

The first terminal may transmit the sharing link through an application corresponding to the first application interface, or the first terminal may transmit the sharing link through another instant messaging application other than the application corresponding to the first application interface.

In one possible implementation, the first application interface may further include: a contact information setting option.

The first terminal may further obtain a target contact number in response to receipt of a setting operation on the contact information setting option. Correspondingly, when a contact number is set, the sharing link is further used for the second terminal to obtain the target contact number.

The contact number may be a contact number of the first terminal, or may be a contact number of another terminal other than the first terminal, for example, the contact number may be a contact number of an emergency contact person of the user corresponding to the first terminal.

The sharing link can not only be transmitted to the first shared object upon triggering by the user, but also can be automatically transmitted to a designated shared object by the first terminal in a specific scenario.

In one possible implementation, the first terminal transmits the sharing link to a third terminal corresponding to a designated shared object when first information in the at least one type of target information meets a first designated condition, the first shared object does not include the designated shared object, and sharing of the target information is still lasting.

In one possible implementation, whether the sharing of the target information ends may be manually set at the first terminal. In other words, the user of the first terminal may set start and end of the sharing. Alternatively, whether the sharing of the target information ends may be automatically determined by the first terminal, where determining the end of the sharing may be based on duration of continuous sharing (for example, ending the sharing after 2 hours of continuous sharing), a condition for ending sharing (for example, ending the sharing when reaching a specific location), etc., which is not limited in this embodiment.

At the end of the sharing, the first terminal stops reporting the target information to the server.

The designated shared object may be a shared object set in advance in the first terminal. In one embodiment, the designated shared object and the first shared object are set through different selection entries.

In this embodiment of the present disclosure, when one or more types of information (the first information) in the at least one type of target information of the first terminal meets a designated condition, and the sharing link is not currently shared with the first shared object, the sharing link may be automatically transmitted to a third terminal corresponding to a preset designated shared object.

In other words, in this embodiment of the present disclosure, the sharing link may be shared with a terminal of a shared object manually selected by the user of the first terminal, or may be shared with a terminal of a preset shared object.

In one possible implementation, the first designated condition includes at least one of the following:
1) The first information includes communication information of the first terminal, and a contact object of the communication information is a designated contact object.

In one embodiment, the designated contact object may be an object manually set by the user or an object having a specific attribute automatically identified by the first terminal, and the specific attribute may be a risk attribute.

For example, the designated contact object may be a preset contact object (which may be a contact number, an area code of a designated area, etc.) manually set by the user, or may be a high-risk contact object identified by the first terminal.

For example, if the first terminal receives an unsafe contact (for example, a telecommunications fraud call) within a period of time prior to a current time, the first terminal may transmit a reminder to the second terminal with which the first terminal has recently shared information.

2) The first information includes location information of the first terminal, and the location information includes designated location information.

In one embodiment, the designated location information may be coordinates or places manually set by the user, or may be places having a specific attribute automatically identified by the first terminal, and the specific attribute may be a risk attribute or a danger attribute.

For example, the designated location information may be a designated place (for example, a park or a bank) manually set by the user, or may be a place having a safety risk identified by the first terminal.

For example, when the first terminal moves to a site that may have a safety problem (for example, near an ATM machine, where a transfer action due to fraud may occur), the first terminal may transmit a reminder to the second terminal that has been recently shared information by the first terminal.

3) The first information includes device status information of the first terminal, and the device status information indicates that the first terminal is in a designated state.

In one embodiment, the designated state may be a device state manually set by the user, or may be a device state having a specific attribute automatically identified by the first terminal. The specific attribute may be an attitude attribute, a velocity attribute, an acceleration attribute, or the like.

For example, when the first terminal has a relatively low battery level, or when the first terminal detects a violent collision (specifically when an accelerometer detects acceleration of a large value), the first terminal may transmit a reminder to the second terminal with which the first terminal that has recently shared information.

4) The first information includes itinerary information of the first terminal, and the location information of the first terminal deviates from a route corresponding to the itinerary information.

In one possible implementation, the first terminal obtains a real-time location, determines whether the real-time location is on a route corresponding to the itinerary information, and if a degree of deviation of the real-time location from the route reaches a threshold (for example, if a distance is greater than a distance threshold), determines a route corresponding to deviation itinerary information.

Operation 605: The second terminal displays a second application interface in response to receipt of a trigger operation on the sharing link.

In this embodiment of the present disclosure, the second terminal may display the sharing link through the application corresponding to the sharing link, and when receiving a trigger operation on the sharing link, display a second application interface. The second application interface may be the interface in the application corresponding to the sharing link, the interface in the subroutine in the application corresponding to the sharing link, or, it can also be the interface of other applications other than the application corresponding to the sharing link.

Operation 606: The second terminal displays the at least one type of target information on the second application interface, where
the at least one type of target information is at least one type of information selected from at least two types of candidate information of the first terminal through a shared information selection control in a first application interface displayed by the first terminal.

In this embodiment of the present disclosure, the first terminal may report the target information to a cloud server after transmitting the sharing link, and the cloud server transmits the sharing link to the second terminal for displaying on the second application interface. Correspondingly, after the second terminal displays the second application interface, the target information may be requested from the server and displayed.

In some embodiments, the second application interface may be an interface in the second application.

The interface displaying the sharing link in the second terminal and the second application interface may be interfaces of different applications, or may be interfaces of a same application. Alternatively, the application corresponding to the second application interface may be a sub-application of the application corresponding to the interface displaying the sharing link in the second terminal. The sub-application refers to a program that runs depending on a main program. For example, the main program is an instant messaging application, and the sub-application is a mini program.

In one possible implementation, the first terminal transmits the at least one type of target information of the first terminal to the server; when detecting that first information in the at least one type of target information meets the first designated condition, the server may transmit a first reminder message of the first information to the second terminal; and correspondingly, the second terminal receives the first reminder message and displays the first reminder message in a third application interface.

In one embodiment, when transmitting the first reminder message of the first information to the second terminal, the server may transmit the first reminder message of the first information to a target terminal; the target terminal is a second terminal that has received the sharing link transmitted by the first terminal within a target period of time; and the target period of time is a period of time having a designated duration before a current time.

For example, an itinerary user APP is installed in the first terminal and a mini program (that is, a sub-application) of an itinerary follower is installed in the second terminal. Referring to FIG. 7, FIG. 7 is a schematic diagram of a process for transmitting a first reminder message involved in an embodiment of the present disclosure. As shown in FIG. 7, the process for transmitting a first reminder message may include the following operations:
S71: After an itinerary user enables a risk incoming call function, when the itinerary user receives an incoming call in an itinerary, an App end obtains an incoming call number A and performs networked number query by using an itinerary back-end server of a cloud end.
S72: After receiving a number query request, the itinerary back-end server queries a number information database for the number A, to determine whether the number A is a risk type number, such as fraud or harassment. After the query is completed, a query result of the number A is returned to the App end.
S73: If the query result of the incoming call number A indicates a risk, the itinerary back-end server synchronizes the risk to a risk issuing decision module, which is mainly responsible for a risk notification frequency control policy and itinerary follower management, and if an issuing condition is met, a risk message is pushed to a message management center of a server.
S74: The message management center in the server receives the message, and transmits a service message to a mini program end of an itinerary subscriber.
S75: A message center of the mini program end of the itinerary subscriber pops up a reminder card related to a risk incoming call in this itinerary.

In one possible implementation, the second terminal may further receive a second reminder message transmitted by the server; the second reminder message is a message transmitted by the server when the first terminal anomaly stops sharing of the at least one type of first information; and the second terminal displays the second reminder message on the third application interface.

The first terminal anomaly stops sharing of the at least one type of first information; for example, anomaly stopping sharing of the at least one type of first information by first terminal may refer to that the first terminal stops sharing of the at least one type of first information due to an abnormal interruption of a network connection thereof.

In this embodiment of the present disclosure, when the first terminal anomaly stops sharing of the at least one type of first information, the server can still transmit a reminder to the second terminal, so that the second terminal corresponding to the shared object can timely learn about a relevant situation of the object corresponding to the first terminal.

Upon receipt of a trigger operation on the first reminder message or the second reminder message, the second terminal may transition to a details page corresponding to the first reminder message or the second reminder message.

To avoid the target information of the first terminal being obtained by an object other than the first shared object or the designated shared object to cause information leakage, in one possible implementation, the sharing link may be a private link for each second terminal; in other words, after the second terminal forwards the sharing link to another terminal, the another terminal cannot open the sharing link, and further cannot obtain and display the target information of the first terminal.

In one possible implementation, the transmitting, by the first terminal, a sharing link to the second terminal corresponding to the first shared object in response to receipt of a selection operation on a first shared object in the list of objects to be shared includes:
obtaining, by the first terminal, first identification information from a server, where the first identification information corresponds to at least one type of target information in the server; generating the sharing link including the first identification information; and transmitting the sharing link to the second terminal corresponding to the first shared object, where the first identification information is bound to a private terminal of the sharing link in the server; the private terminal is a terminal that receives the trigger operation on the sharing link for the first time; binding status between the first identification information and the private terminal is used by the server to authenticate an information obtaining request; and the information obtaining request is a request for obtaining the target information through the sharing link.

In one embodiment, before obtaining the first identification information from the server, the first terminal may obtain second identification information from the server, where the second identification information is used for identifying at least one type of target information of the first terminal in the server. Subsequently, after determining the first shared object, the first terminal may transmit a request carrying the second identification information to the server when obtaining the first identification information from the server, and the server generates the first identification information according to the second identification information and returns the first identification information to the first terminal.

Correspondingly, the second terminal transmits an information obtaining request to the server in response to receipt of the trigger operation on the sharing link before the displaying the at least one type of target information of the first terminal on the second application interface, where the information obtaining request carries the first identification information and identification information of the second terminal; and receives the at least one type of target information transmitted by the server after authenticating the information obtaining request.

On a server side, the server may receive the at least one type of target information transmitted by the first terminal; and correspondingly, the server may generate the second identification information for the at least one type of target information of the first terminal. After receiving the request transmitted by the first terminal for obtaining the first identification information, the server may generate the first identification information according to the second identification information and return the first identification information to the first terminal.

Subsequently, upon receipt of the information obtaining request transmitted by the second terminal, the server may determine whether identification information of a terminal bound to the first identification information in the information obtaining request exists in the server; if the identification information does not exist, establish a binding relationship between the first identification information and the identification information of the second terminal; and determine whether authentication of the information obtaining request is successful; if the identification information of the terminal bound to the first identification information in the information obtaining request already exists in the server, and the identification information of the terminal bound to the first identification information is the identification information of the second terminal, the server determines that the authentication of the information obtaining request is successful and returns the at least one type of target information of the first terminal to the second terminal; If the identification information of the terminal bound to the first identification information in the information obtaining request already exists in the server, and the identification information of the terminal bound to the first identification information is not the identification information of the second terminal, the server determines that the authentication of the information obtaining request fails and returns an error prompt to the second terminal.

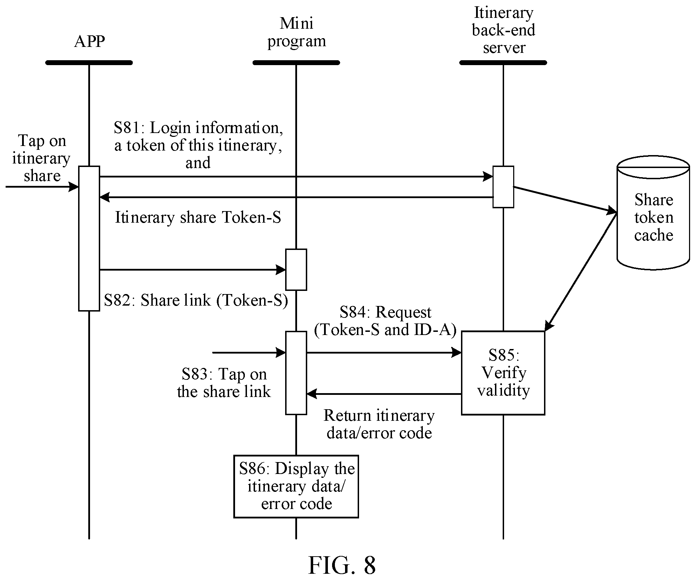

For example, in an itinerary sharing scenario, still, an itinerary user APP is installed in a first terminal and mini program of an itinerary follower is installed in a second terminal. Referring to FIG. 8, FIG. 8 is a flowchart of a process for transmitting a private link involved in an embodiment of the present disclosure. As shown in FIG. 7, the process may include the following operations.

S81: An itinerary user clicks on itinerary share, and this operation initiates a network request to an itinerary back-end server, the request carrying login information (for example, a user identity, or a login token) and this itinerary token; the server returns this itinerary sharing Token-S; each time the share is clicked on, a unique itinerary share token bound to the itinerary this time is returned.

A specific algorithm for generating the share token includes the following.
1) String S = mD5 (16 bytes) of itinerary token + current server time (8 bytes) + 1 byte of random code;
2) binary code M = binary code converted from a string in accordance with a UTF_8 encoding format; and
3) share token = binary code M subject to Base64 encoding processing.

S82: Share the itinerary sharing Token-S as a parameter of a sharing link of the mini program, together with the link, with an itinerary follower through an SDK mini program card share interface.

S83: The itinerary follower clicks on the sharing link in a chat window to turn to the itinerary mini program.

S84: The itinerary mini program retrieves the itinerary sharing Token-S carried in an entry parameter, and a current mini program user ID ID-A, and requests itinerary data from the itinerary back-end server, where the requested parameters carry the itinerary sharing Token-S and the ID-A.

S85: After receiving the request, the itinerary back-end server verifies validity of the carried itinerary sharing Token-S and mini program user ID-A. By accessing an itinerary share token cache, whether the itinerary sharing Token-S has been bound by a mini program user is queried; if the itinerary sharing Token-S is not bound by a mini program user, the itinerary sharing Token-S is bound to the mini program user ID-A, and by using the itinerary share Token S, an itinerary user X is reversely resolved, and itinerary data of the itinerary user X is returned; if the itinerary sharing Token-S has been already bound by a mini program user, whether the bound mini program user ID is consistent with the mini program user ID-A is further determined; if consistent, an itinerary- user X is reversely resolved by using the itinerary sharing Token-S, and itinerary data of the itinerary user X is returned; and otherwise, an error code is returned.

In one possible implementation, an algorithm for reversely resolving the user X by using the sharing Token-S is in the following.
1) Binary code M = share Token undergone Base64 decoding processing;
2) string S = string converted from binary code M in accordance with a UTF_8 encoding format;
3) md5 of the itinerary Token = first 16 bytes retrieved from the string;
4) reversely looking up the itinerary Token by using md5 of the itinerary Token; and
5) mapping the itinerary user X from the itinerary Token by using an itinerary mapping table.

S86: An itinerary follower mini program end displays itinerary information of the itinerary user according to the itinerary data returned in operation S65.

Operation 607: The second terminal initiates a call to the target contact number in response to receipt of the trigger operation on a calling control.

The target contact number is a contact number obtained by the first terminal upon receipt of the setting operation on the contact information setting option in the first application interface.

In this embodiment of the present disclosure, when the user of the first terminal sets a target contact number, the user of the second terminal may further initiate a call to the target contact number by using the calling control in the second application interface.

In one possible implementation, the first application interface further includes a call control corresponding to the first shared object; and the method further includes:
displaying, by the first terminal, a call interface for a voice call or video call corresponding to the first shared object in response to receipt of a trigger operation on the call control.

In one possible implementation, the first application interface is an interface in the first application; the first shared object is a contact object in a second application; the first application and the second application are different applications; and
the displaying, by the first terminal, a call interface for a voice call or video call corresponding to the first shared object in response to receipt of a trigger operation on the call control includes:
invoking, by the first terminal, the second application and displaying the call interface in the second application in response to receipt of the trigger operation on the call control.

In this embodiment of the present disclosure, the shared object may be a contact object in the second application, and the second application may be an instant messaging application other than the first application; and when the first terminal receives the trigger operation on the call control corresponding to the first shared object, the second application may be opened to directly display the call interface corresponding to the first shared object in the second application, so as to request connection of a voice call or a video call with the first shared object.

In this embodiment, by setting the sharing link as a private link and authenticating, by the server, the terminal that requests for obtaining the target information, only a specific shared object can obtain the target information, which helps to avoid information leakage from the first terminal and further improve the degree of safety of information sharing.

In addition, the first terminal can automatically transmit a sharing link to a preset shared object when identifying that the target information meets a specific condition, thereby avoiding the problem that important information cannot conveyed to the shared object due to incomplete settings during manually setting of the shared object.

In an exemplary solution based on the method embodiment, by combining application level data obtaining and security guard capabilities of a mobile phone butler app on a mobile phone end, sharing and attention capabilities of an itinerary guard mini program on an instant messaging application end, and map positioning and navigation capabilities on an H5 end, and by connecting functional services by using a cloud instruction, multi-end interactions are implemented. Users and guardians thereof are provided with functional services of real-time traveling location viewing, accurate risk incoming call notification, secure private itinerary sharing link, and real-time information sharing services for multiple people and terminals, so as to jointly guard the traveling safety of the users and avoid the situations such as traveling being induced by telecommunications fraud before an itinerary, and various types of sudden itinerary risks such as user missing, getting lost, and falling during an itinerary. In addition, information of a final itinerary point after the itinerary ends is obtained.
1) Before the itinerary, an itinerary guard service on a mobile phone app end is enabled actively by a monitored party such as the elderly (or children, or women living alone) or manually by a monitoring party, to generate a private itinerary sharing link particular for this itinerary, and the monitoring party such as the offspring (or parents) are shared with the private itinerary sharing link through an instant messaging app, and are informed of start place and time of the itinerary through a mini program service notification in the instant messaging app.
2) During the itinerary, the guardians such as the offspring (or parents) may: open the private link generated for this itinerary on the instant messaging application, to conveniently view, in real time, a real-time traveling route and location of the monitored party such as the elderly (or children, women living alone), thereby avoiding the situations such as missing or getting lost; check a current battery level of the mobile phone of the monitored party, thereby avoiding disconnection or reminding the monitored party to charge the mobile phone in a timely manner; check information of a risk incoming call in the past 12 hours, to determine whether the monitored party is currently at risk of being deceived; and after making a comprehensive judgment in combination with the information above, if the monitored party has any traveling risk, perform necessary phone contact and communication through the mini program end of the monitoring party.
3) After the itinerary ends, the monitoring party may be informed of the end place and time of the itinerary through a mini program service notification of the instant messaging application, so that the place and a search range of the monitored party can be quickly determined in case of unexpected traveling risks such as missing.

With the solution above, the guardian is provided with a comprehensive product solution for remotely guarding the traveling safety of the monitored party.

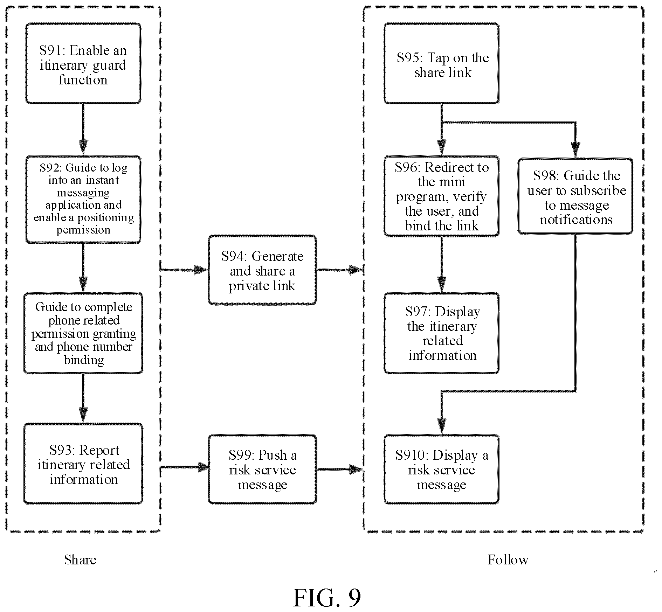

Referring to FIG. 9, FIG. 9 is an overall framework diagram of itinerary information sharing according to an exemplary embodiment of the present disclosure. As shown in FIG. 9, the overall framework in the following.

S91: An itinerary user enters an application App through a mobile phone desktop icon and enables an itinerary guard function by clicking.

S92: Guide the user to log in to an instant messaging application and enable a positioning permission. Subsequently, the user is guided, through a branch path, to complete non-essential processes such as phone related permission granting and phone number binding.

The App transmits a network request to an itinerary guard service back-end, to obtain a Token-T of this itinerary. The itinerary guard service back-end generates and maintains an itinerary mapping table, so that an itinerary token and itinerary data in a subsequent process can be looked up by using the itinerary mapping table.

S93: Report itinerary related information. The App enables a timed task, the task may read user battery level, location, and risk call information, and transmit to an itinerary guard back-end server through an encrypted network.

S94: Generate and share a private link. When the itinerary user clicks on the itinerary share, this operation is to be networked to the itinerary guard service back-end. The request carries the Token-T of this itinerary, to obtain a sharing Token-S of this itinerary. Next, the itinerary sharing Token-S is concatenated as a parameter into the sharing link of the instant messaging application. The sharing link of the instant messaging application = fixed link+itinerary sharing Token-S. The itinerary sharing Token-S can only be bound by one itinerary mini program user. After the binding is completed, the itinerary sharing Token-S automatically becomes invalid. In other words, if a user of the current instant messaging application clicks on the sharing link and then forwards it to a user of another instant messaging application, the user of the another instant messaging application cannot view information of this itinerary.

S95: A user of the instant messaging application clicks on the sharing link on the instant messaging application side, then through the link, an itinerary mini program is automatically redirected to, the mini program guides the current user of the instant messaging application to complete an itinerary message subscription service, and in addition, the user of the instant messaging application automatically becomes a follower of this itinerary.

S96: Redirect to the mini program, verify the user, and bind the link. The itinerary mini program may carry a current mini program user ID and the itinerary sharing Token-S for networked request for itinerary user data. After receiving the itinerary data request, the itinerary guard back-end first verifies a binding relationship between the current mini program user ID and the itinerary sharing Token-S. If the verification is successful, an itinerary user X associated with the itinerary sharing Token-S is reversely resolved, and itinerary related information such as location information, the number risk calls (which may not be available), a battery level of the itinerary user X is returned; if the verification fails, an error code is returned.

S97: After receiving the itinerary information returned from the itinerary guard service back-end, the itinerary mini program displays the itinerary related information of the itinerary user X.

S98: Guide the user to subscribe to message notifications. The itinerary mini program guides the user to subscribe to risk service messages, such as risk incoming calls.

S99: Push a risk service message. For an itinerary user who has completed granting of call related permissions, when an incoming call occurs before or during the itinerary (12 hours) of the itinerary user, the app immediately reports the incoming call. After receiving the incoming call report, the itinerary guard service back-end pushes the message to a service message management center of the instant messaging application according to an established distribution policy. The service message management center of the instant messaging application then pushes the message to the mini program of an itinerary follower who has subscribed to itinerary messages.

S910: Display a risk service message.

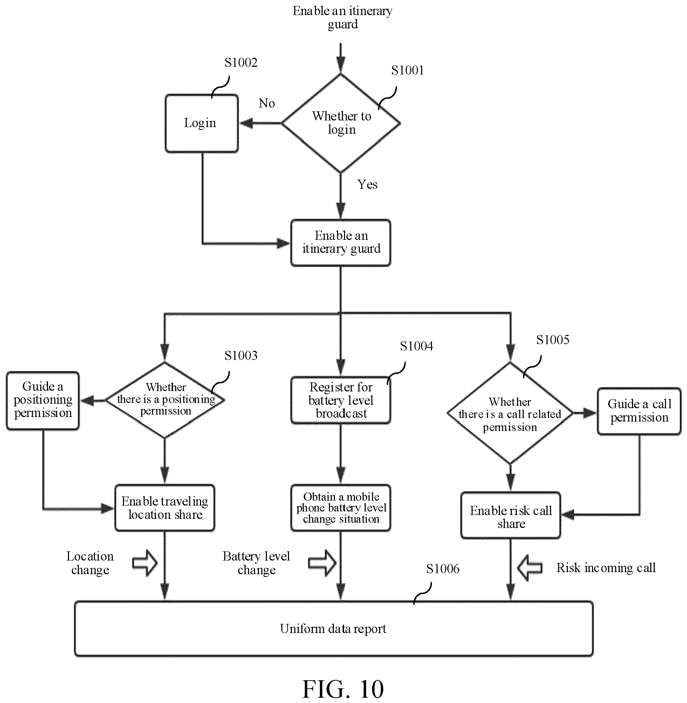

Referring to FIG. 10, FIG. 10 is a framework diagram of an itinerary information sharing side according to an exemplary embodiment of this application. As shown in FIG. 10, the framework of the itinerary information sharing side is in the following.

S1001: After an itinerary user clicks on an itinerary guard function, check whether the current user has logged into an instant messaging application, and if the user has not logged into the instant messaging application or login status of the instant messaging application is expired, turn to S1002.

S1002: Pull up an app side instant messaging application sdk, complete login at the app side instant messaging application, and obtain a current user id and login token.

The app side initiates an network request to an itinerary guard service back-end, where request parameters carry the user ID and the login token. After receiving an itinerary start request, the itinerary guard back-end server checks validity of the current user, and if valid, returns the itinerary token, which means that starting of the itinerary is successfully; and otherwise, returns an error code, which means that starting of the itinerary fails.

S1003: Check whether the current user has a positioning permission; if the positioning permission is not enabled, guide the user to complete granting of the positioning permission, and after the granting of the permission is successful, starting a timed task of obtaining an itinerary location, and enable traveling location sharing.

S1004: Register for system battery level change broadcast detection, to obtain a mobile phone battery level change situation of the current itinerary user.

S1005: This operation is optional. Whether the app end has a call related permission is checked; and if not, the user is guided to enable the function; if yes, a risk call detection function is enabled and risk call share is enabled.

S1006: When a location changes, a mobile phone battery level changes, or an incoming call appears, uniformly report the related data obtained in S 1003, S1004, and S 1005 to the itinerary guard back-end server, and the report needs to carry the itinerary token obtained in S1003, and the itinerary token is used for the reported data validity verification; if the itinerary token is valid and is not expired, the guard service back-end store this data report for subsequent itinerary data display; or if the itinerary token is invalid or is expired, discard this data report.

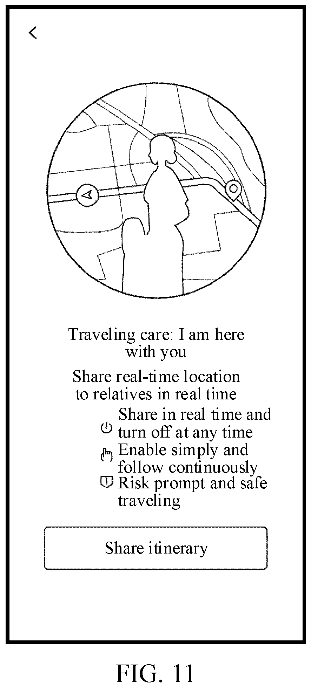

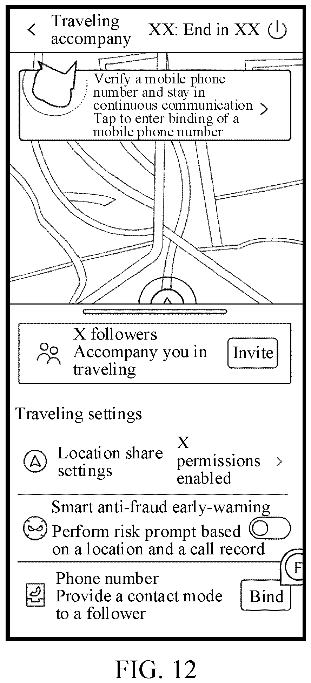

Referring to FIG. 11 and FIG. 12, FIG. 11 and FIG. 12 are schematic interface diagrams of an itinerary information sharing side involved in an embodiment of this application. In the solution of the embodiments of this application, a user enables an itinerary guard service of an application before an itinerary, and the function can be enabled after guiding to complete login to an instant messaging application and granting of a positioning permission. After the itinerary is started, the application displays a map of a current location of the user. The user may share this itinerary with a friend in the instant messaging application. The friend in the instant messaging application may associate a mini program on the instant messaging application end to view information such as a location, a mobile phone battery level, and risk call number of the user. The user may further bind his/her own phone number, so that an itinerary follower can conveniently make a call for communication therewith when necessary.

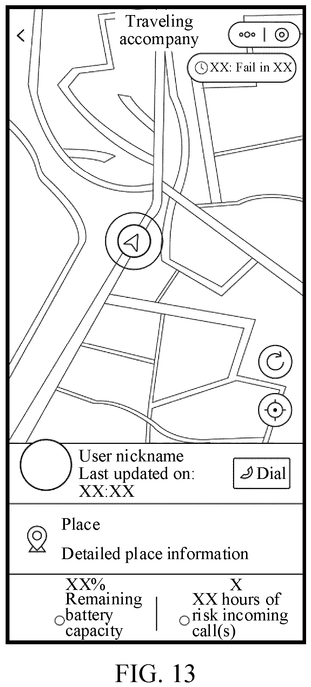

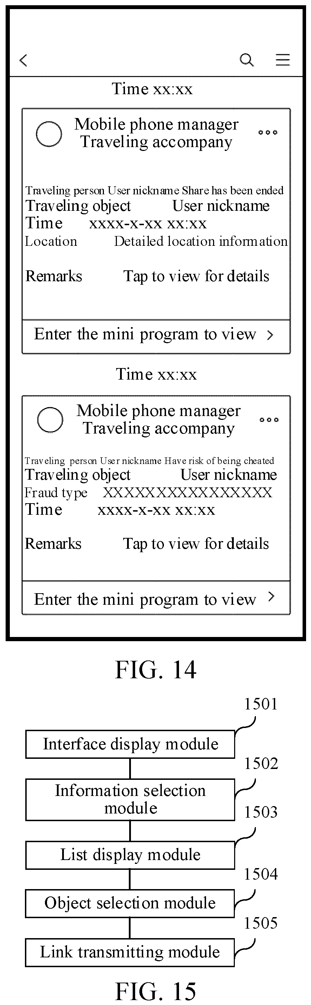

Referring to FIG. 13 and FIG. 14, FIG. 13 and FIG. 14 are schematic interface diagrams of a shared side involved in an embodiment of this application. After receiving itinerary share information, a follower may click on the private sharing link on the instant messaging application to pull up an associated mini program. This link is an exclusive link for the follower, and is invalid after being forwarded. After opening the mini program, the follower may view real-time location information, battery level information, and risk call information of a traveling person. In addition, the follower may subscribe to itinerary messages and receive a service message notification from the instant messaging application in a timely manner when an itinerary person receives a risk call or when the itinerary ends abnormally.

The actual demands of the monitored party (such as the elderly population) for autonomous traveling and social interaction are difficult to meet. By the solutions shown in this embodiment of this application, the traveling safety of the monitored party can be guarded under remote guidance or guard by the monitoring party by using real-time positioning and navigation services in the itinerary guard function, so that the traveling and social interaction demands of the monitored party are met. In addition, by associating risk incoming call information before traveling, the travel being induced by telecommunications fraud before an itinerary is avoided, thereby reducing the risk of property damage; and further various types of sudden itinerary risks such as user missing, getting lost, and falling during an itinerary are also avoided.

FIG. 15 is a block diagram of an apparatus for information sharing according to an exemplary embodiment of this application. The apparatus for information sharing may be configured to execute all or part of operations performed by a first terminal in the method in FIG. 3 or FIG. 6. As shown in FIG. 15, the apparatus for information sharing may include:
an interface display module 1501, configured to display a first application interface, the first application interface including a shared object selection control and a shared information selection control;
an information selection module 1502, configured to select at least one type of candidate information as at least one type of target information for sharing from at least two types of candidate information of a first terminal in response to receipt of a selection operation on the shared information selection control;
a list display module 1503, configured to display a list of objects to be shared in response to receipt of a selection operation on the shared object selection control;
an object selection module 1504, configured to receive a selection operation on a first shared object in the list of objects to be shared to select a first shared object; and
a link transmitting module 1505, configured to transmit a sharing link to a second terminal corresponding to the first shared object, where the sharing link is used by the second terminal to obtain and display the at least one type of target information from the first terminal.

In one possible implementation, the at least two types of candidate information includes at least two of the following information:
location information of the first terminal;
device status information of the first terminal;
communication information of the first terminal;
and itinerary information of the first terminal.

In one possible implementation, the first application interface further includes: a contact information setting option.
the apparatus further includes:
a contact number obtaining module, configured to obtain a target contact number in response to receipt of a setting operation on the contact information setting option, where
when the target contact number is set, the sharing link is further used by the second terminal to obtain the target contact number.
In one possible implementation, the link transmitting module 1503 is further configured to transmit the sharing link to a third terminal corresponding to a designated shared object when first information in the at least one type of target information meets a first designated condition, the first shared object does not include the designated shared object, and sharing of the target information is still lasting, where the designated shared object is a shared object set in advance in the first terminal.

In one possible implementation, the apparatus further includes:
a reminder transmitting module, configured to transmit a first reminder message of first information to a target terminal in response to the first information in the at least two types of candidate information of the first terminal meets a designated condition, where
the target terminal is a second terminal that has received the sharing link transmitted by the first terminal within a target period of time; and the target period of time is a period of time having a designated duration before a current time.

In one possible implementation, the designated condition includes at least one of the following conditions:
the first information includes communication information of the first terminal, and a contact object of the communication information includes a designated contact object;
the first information includes location information of the first terminal, and the location information includes designated location information;
the first information includes device status information of the first terminal, and the device status information indicates that the first terminal is in a designated state; and
the first information includes itinerary information of the first terminal, and the location information of the first terminal deviates from a route corresponding to the itinerary information.

In one possible implementation, the link transmitting module 1503 is configured to:
obtain first identification information from a server, where the first identification information corresponds to at least one type of target information in the server;
generate the sharing link including the first identification information; and
transmit the sharing link to the second terminal corresponding to the first shared object, where
the first identification information is bound to a private terminal of the sharing link in the server; the private terminal is a terminal that receives the trigger operation on the sharing link for the first time; binding status between the first identification information and the private terminal is used by the server to authenticate an information obtaining request; and the information obtaining request is a request for obtaining the target information through the sharing link.

In one possible implementation, the apparatus further includes:
an information transmitting module, configured to transmit the at least one type of target information to the server.

In one possible implementation, the first application interface further includes a call control corresponding to the first shared object; and
the apparatus further includes: a call interface display module, configured to display a call interface for a voice call or video call corresponding to the first shared object in response to receipt of a trigger operation on the call control.

In one possible implementation, the first application interface is an interface in the first application; the first shared object is a contact object in a second application; the first application and the second application are different applications; and
the call interface display module is configured to invoke the second application and displaying the call interface in the second application in response to receipt of the trigger operation on the call control.

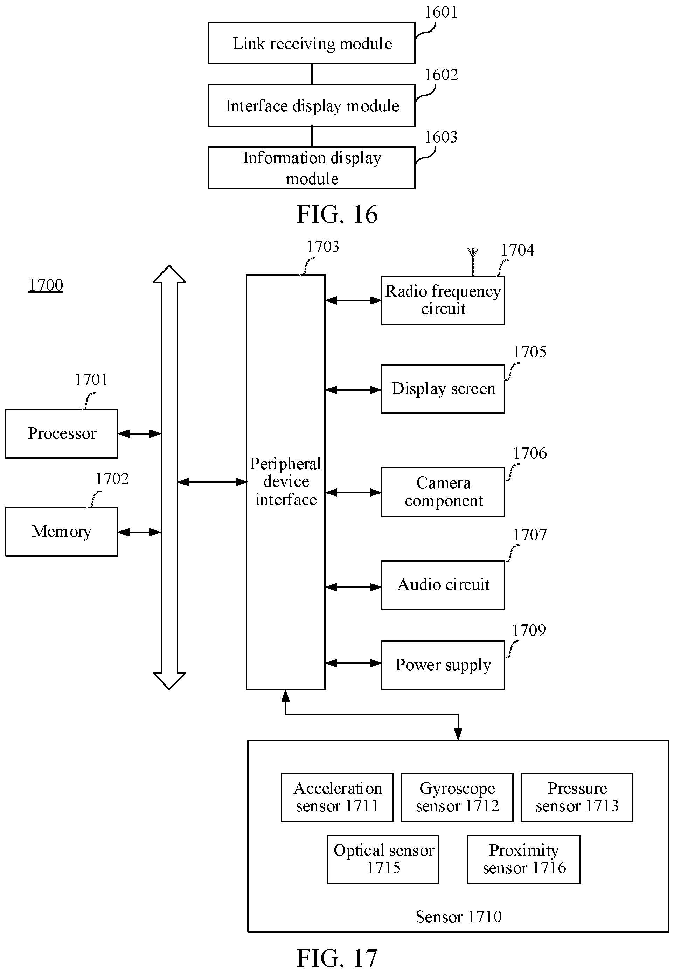

FIG. 16 is a block diagram of an apparatus for information sharing according to an exemplary embodiment of this application. The apparatus for information sharing may be configured to execute all or part of operations performed by a second terminal in the method in FIG. 4 or FIG. 6. As shown in FIG. 16, the apparatus for information sharing may include:
a link receiving module 1601, configured to receive a sharing link transmitted by a first terminal;
an interface display module 1602, configured to display a second application interface in response to receipt of a trigger operation on the sharing link; and
an information display module 1603, configured to display at least one type of target information of the first terminal on the second application interface, where the at least one type of target information is at least one type of information selected among at least two types of candidate information of the first terminal through a shared information selection control in a first application interface displayed by the first terminal.

In one possible implementation, the at least two types of candidate information includes at least two of the following information:
location information of the first terminal;
device status information of the first terminal; and
communication information of the first terminal.

In one possible implementation, the second application interface further includes: a calling control; and
the apparatus further includes: a calling module, configured to initiate a call to the target contact number in response to receipt of the trigger operation on the calling control, where
the target contact number is a contact number obtained by the first terminal upon receipt of the setting operation on the contact information setting option in the first application interface.

In one possible implementation, the apparatus further includes:
an information obtaining request transmitting module, configured to transmit an information obtaining request to the server in response to receipt of the trigger operation on the sharing link before the displaying the at least one type of target information from the first terminal on the second application interface, where the information obtaining request carries the first identification information and identification information of the second terminal;
an information receiving module, configured to receive the at least one type of target information transmitted by the server after the information obtaining request is authenticated, where
the sharing link includes the first identification information; the first identification information corresponds to the at least one type of target information of the first terminal in the server; the first identification information is bound to a private terminal of the sharing link in the server; the private terminal is a terminal that receives the trigger operation on the sharing link for the first time; binding status between the first identification information and the private terminal is used by the server to authenticate an information obtaining request; and the information obtaining request is a request for obtaining the target information through the sharing link.

In one possible implementation, the apparatus further includes:
a first reminder receiving module, configured to receive a first reminder message transmitted by the server, where the first reminder message is a reminder message for the first information in the at least one type of target information, and the first reminder message is a message transmitted by the server when the first information meets the first designated condition; and
a first reminder display module, configured to display the first reminder message on a third application interface.

In one possible implementation, the first designated condition includes at least one of the following conditions:
the first information includes communication information of the first terminal, and a contact object of the communication information includes a designated contact object;
the first information includes location information of the first terminal, and the location information includes designated location information;
the first information includes device status information of the first terminal, and the device status information indicates that the first terminal is in a designated state; and
the first information includes itinerary information of the first terminal, and the location information of the first terminal deviates from a route corresponding to the itinerary information.

In one possible implementation, the apparatus further includes:
a second reminder receiving module, configured to receive a second reminder message transmitted by the server, where the second reminder message is a message transmitted by the server when the first terminal anomaly stops sharing of the at least one type of first information; and
a second reminder display module, configured to display the second reminder message on a third application interface.

FIG. 17 is a structural block diagram of a computer device 1700 according to an exemplary embodiment of this application. The computer device 1700 may be a terminal of a user, for example, a wearable device, a smartphone, a tablet, or a personal computer.

Typically, the computer device 1700 includes: a processor 1701 and a memory 1702.

The processor 1701 may include one or more processing cores, for example, a 4-core processor or an 8-core processor. The processor 1701 may be implemented in at least one hardware form of a digital signal processor (DSP), a field-programmable gate array (FPGA), and a programmable logic array (PLA).

The memory 1702 may include one or more computer-readable storage media. The computer-readable storage media may be non-transitory. The memory 1702 may further include a high-speed random access memory and a nonvolatile memory, for example, one or more disk storage devices or flash storage devices. In some embodiments, a non-transitory computer-readable storage medium in the memory 1702 is configured to store at least one computer instruction, and the at least one computer instruction is executable by the processor 1701, to implement all or part of the operations performed by the first terminal or the second terminal in the method embodiments provided in the embodiments of this application.

In some embodiments, the computer device 1700 may further include: a peripheral interface 1703 and at least one peripheral. The processor 1701, the memory 1702, and the peripheral interface 1703 may be connected through a bus or a signal line. Each peripheral may be connected to the peripheral interface 1703 through a bus, a signal line, or a circuit board. The peripheral includes: at least one of a radio frequency circuit 1704, a display screen 1705, a camera component 1706, an audio circuit 1707, and a power supply 1709.

In some embodiments, the computer device 1700 may further include one or more sensors 1710. The one or more sensors 1710 include but are not limited to: an acceleration sensor 1711, a gyroscope sensor 1712, a pressure sensor 1713, an optical sensor 1715, and a proximity sensor 1716.

A person skilled in the art may understand that the structure shown in FIG. 17 constitutes no limitation on the computer device 1700, and the computer device 1700 may include more or fewer components than those shown in the figure, or some components may be combined, or a different component deployment may be used.

In one exemplary embodiment, a non-transitory computer-readable storage medium including an instruction, for example, a memory including at least one computer instruction, is further provided. The at least one computer instruction may be executable by a processor to implement all or part of the operations performed by the first terminal or the second terminal in the method provided in any of the embodiments shown in FIG. 3, FIG. 4, or FIG. 6 above. For example, the non-transitory computer-readable storage medium may be a ROM, a RAM, a CD-ROM, a magnetic tape, a floppy disk, and an optical data storage device.

In one exemplary embodiment further provided is a computer program product or a computer program, the computer program product or the computer program including a computer instruction, stored in a computer-readable storage medium. A processor of the computer device reads the computer instruction from the computer-readable storage medium, and the processor executes the computer instruction, to cause the computer device to perform all or part of the operations performed by the first terminal or the second terminal in the method provided in any of the embodiments shown in FIG. 3, FIG. 4, or FIG. 6 above.

Information (including, but not limited to, user account information, user personal information, etc.), data (including, but not limited to, data for analysis, stored data, displayed data, etc.), and signals involved in this application are all authorized by the users or fully authorized by all parties, and the collection, use, and processing of relevant data need to comply with relevant laws, regulations, and standards of relevant countries and regions. For example, the user accounts, schedule activities, and other information involved in this application are obtained with full authorization.

This application is not limited to the precise structures described above and shown in the accompanying drawings, and various modifications and changes may be made without departing from the scope of this application. The scope of this application is subject only to the appended claims.

## Claims

1. A method for information sharing, executable by a first terminal and a second terminal, the method comprising:
displaying, by the first terminal, a first application interface, the first application interface comprising a first selection control for selecting an object to be shared and a second selection control for selecting a piece of information to be shared;
selecting, by the first terminal and from at least two types of candidate information, a target type of candidate information for sharing, in response to receiving a selection operation on the second selection control;
displaying, by the first terminal, a list of objects to be shared in response to receiving a selection operation on the first selection control;
receiving, by the first terminal, a selection operation on a first object from the list of objects to be shared ;
transmitting, by the first terminal, a sharing link to the second terminal indicated by the first object ;
receiving, by the second terminal, the sharing link transmitted by the first terminal;
displaying, by the second terminal, a second application interface in response to receiving a trigger operation on the sharing link ; and displaying the target type of candidate information on the second application interface .

2. The method according to claim 1, wherein the first application interface further comprises: a contact information setting option for setting a target contact number; and the method further comprises:
obtaining, by the first terminal, the target contact number in response to receiving a setting operation on the contact information setting option, wherein
wherein the target contact number is further obtained by the second terminal through the sharing link,

3. The method according to claim 1 or 2, wherein the method further comprises:
when the selected target type of candidate information meets a first designated condition for sharing with a designated shared object set in advance on the first terminal, the first object does not comprise the designated shared object, and sharing of the target type of candidate information is not complete,
transmitting, by the first terminal, the sharing link to a third terminal indicated by the designated shared object.

4. The method according to claim 3, wherein the first designated condition comprises at least one of the following:
the selected target type of candidate information comprises contact information on the first terminal, and the contact information comprises a designated contact object;
the selected target type of candidate information comprises location information of the first terminal, and the location information comprises designated location information;
the selected target type of candidate information comprises device status information of the first terminal, and the device status information indicates that the first terminal is in a designated state; and
the selected target type of candidate information comprises itinerary information of the first terminal, and the location information of the first terminal deviates from a route indicated by the itinerary information.

5. The method according to any one of claims 1 to 4, wherein the transmitting, by the first terminal, a sharing link to the second terminal indicated by the first object comprises:
obtaining, by the first terminal, first identification information for identifying the target type of candidate information from a server, wherein the first identification information is bound to a terminal for firstly receiving the trigger operation on the sharing link in the server so that the server can authenticate a request for obtaining the target type of candidate information through the sharing link at least based on the first identification information;
generating, by the first terminal, the sharing link comprising the first identification information; and
transmitting, by the first terminal, the sharing link to the second terminal indicated by the first object.

6. The method according to claim 5, wherein the method further comprises:
transmitting, by the first terminal, the target type of candidate information to a server.

7. The method according to any one of claims 1 to 6, wherein the first application interface further comprises a call control for calling the first object; and the method further comprises:
displaying, by the first terminal, a call interface for a voice call or video call with the first object in response to receiving a trigger operation on the call control,

8. The method according to claim 7, wherein the first application interface is an interface in a first application; the first object is a contact object in a second application; the first application and the second application are different applications; and
wherein the displaying, by the first terminal, a call interface for a voice call or video call with the first object in response to receiving a trigger operation on the call control comprises:
invoking, by the first terminal, the second application and displaying the call interface on the second application in response to receiving the trigger operation on the call control.

9. The method according to any one of claims 1 to 8, wherein the second application interface further comprises: a calling control for initiating a call; and the method further comprises:
initiating, by the second terminal, a call to the target contact number in response to receiving the trigger operation on the calling control,
the target contact number is a contact number obtained by the first terminal upon receiving the setting operation on the contact information setting option in the first application interface.

10. The method according to claim 9, wherein the method further comprises:
transmitting, by the second terminal, a request for obtaining the target type of candidate information through the sharing link to the server in response to receiving the trigger operation on the sharing link before the displaying the target type of candidate information on the second application interface, wherein the request carries the first identification information and identification information of the second terminal;
receiving, by the second terminal, the target type of candidate information transmitted by the server after the request is authenticated by the server.

11. The method according to any one of claims 1 to 10, wherein the method further comprises:
receiving, by the second terminal, a first reminder message for reminding that the selected target type of candidate information meets the first designated condition from the server; and
displaying, by the second terminal, the first reminder message on a third application interface.

12. The method according to any one of claims 1 to 11, wherein the method further comprises:
receiving, by the second terminal, a second reminder message for reminding that the first terminal anomaly stops sharing from the server; and
displaying, by the second terminal, the second reminder message on the third application interface.

13. A method for information sharing, executable by a first terminal, the method comprising:
displaying a first application interface, the first application interface comprising a first selection control for selecting an object to be shared and a second selection control for selecting a piece of information to be shared;
selecting a target type of candidate information for sharing from at least two types of candidate information of the first terminal in response to receiving a selection operation on the second selection control;
displaying a list of objects to be shared in response to receiving a selection operation on the first selection control;
receiving a selection operation on a first object from the list of objects to be shared; and
transmitting a sharing link to a second terminal indicated by the first object, wherein the sharing link is used by the second terminal to obtain and display the target type of candidate information of the first terminal.

14. A method for information sharing, executable by a second terminal, the method comprising:
receiving a sharing link transmitted by a first terminal;
displaying a second application interface in response to receiving a trigger operation on the sharing link; and
displaying the target type of candidate information of the first terminal on the second application interface, wherein the target type of candidate information is selected from at least two types of candidate information of the first terminal through a selection control for selecting a piece of information to be shared in a first application interface displayed by the first terminal.

15. An apparatus for information sharing, the apparatus comprising:
an interface display module, configured to display a first application interface, the first application interface comprising a first selection control for selecting an object to be shared and a second selection control for selecting a piece of information to be shared;
an information selection module, configured to select a target type of candidate information for sharing from at least two types of candidate information of a first terminal in response to receiving a selection operation on the second selection control;
a list display module, configured to display a list of objects to be shared in response to receiving a selection operation on the first selection control;
an object selection module, configured to receive a selection operation on a first object from the list of objects to be shared; and
a link transmitting module, configured to transmit a sharing link to a second terminal indicated by the first object, wherein the sharing link is used by the second terminal to obtain and display the target type of candidate information of the first terminal.

16. An apparatus for information sharing, the apparatus comprising:
a link receiving module, configured to receive a sharing link transmitted by a first terminal;
an interface display module, configured to display a second application interface in response to receiving a trigger operation on the sharing link; and
an information display module, configured to display the target type of candidate information of the first terminal on the second application interface, wherein the target type of candidate information is selected from at least two types of candidate information of the first terminal through a selection control for selecting a piece of information to be shared in a first application interface displayed by the first terminal.

17. A computer device, comprising a processor and a memory, storing at least one computer instruction, and the at least one computer instruction being loaded and executable by the processor to implement the method for information sharing according to claim 13 or 14.

18. A computer-readable storage medium, storing at least one computer instruction, and the at least one computer instruction being loaded and executable by a processor to implement the method for information sharing according to claim 13 or 14.

19. A computer program product, comprising a computer instruction, and the computer instruction being read and executable by a processor of a computer device, to cause the computer device to implement the method for information sharing according to claim 13 or 14.
